# EUROPÄISCHE PATENTSCHRIFT

(11) **EP 1 316 199 B1**
(45) Veröffentlichungstag und Bekanntmachung des Hinweises auf die Patenterteilung: **09.11.2005**
(21) Anmeldenummer: 01971671.1
(22) Anmeldetag: 30.08.2001
(51) Int. Cl.: H04M 3/537, H04M 1/725

(54) **FUNKGERÄT**
RADIO COMMUNICATION DEVICE
APPAREIL RADIO

(30) Priorität: 02.09.2000 DE 10043284
(43) Veröffentlichungstag der Anmeldung: 04.06.2003
(73) Patentinhaber: ROBERT BOSCH GMBH, 70442 Stuttgart (DE)
(72) Erfinder: HANS, Martin, 31139 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); STEIGER, Joachim, 70195 Stuttgart (DE); BAER, Siegfried, 75179 Pforzheim (DE); BECKMANN, Mark, 31789 Hameln (DE); GOTTSCHALK, Thomas, 38126 Braunschweig (DE)
(86) Internationale Anmeldenummer: PCT/DE2001/003304
(87) Internationale Veröffentlichungsnummer: WO 2002/019676

(56) Entgegenhaltungen:
- EP-A- 0 936 793
- GB-A- 2 326 051
- US-A- 5 570 025

## Beschreibung

### Stand der Technik

In Mobilfunksystemen, wie beispielsweise nach dem GSM-Standard (groupe spéciale mobile) funktionierende Mobilfunksysteme, ist vorgesehen, dass Teilnehmer im Mobilfunknetz Kurznachrichten senden und empfangen können. Ein Beispiel für einen solchen Kurznachrichtendienst ist der sogenannte SMS-Dienst (Short Message Service). Der Eingang einer solchen Kurznachricht wird bei typischen Mobilfunktelefonen dem Adressaten durch eine entsprechende Anzeige im Display des Telefons mitgeteilt.

Aus der GB-A-2326051 ist ein Mobilfunkgerät bekannt mit zwei Anzeigevorrichtungen. Mit einer äußeren Anzeigevorrichtung ist es möglich, Identifizierungsinformationen, z.B. die Rufnummer eines Anrufers, angezeigt zu bekommen, in einer Position, in der die erste Anzeigevorrichtung nicht zugänglich ist.

### Vorteile der Erfindung

Das erfindungsgemäße Funkgerät mit den Merkmalen des Hauptanspruchs hat demgegenüber den Vorteil, dass ohne Änderung des Betriebszustandes der Anzeigevorrichtung einem Benutzer des Funkgeräts mitteilbar ist, dass eine Nachricht, beispielsweise eine Kurznachricht, für ihn eingetroffen ist. Dies ist insbesondere dann vorteilhaft, wenn die Anzeigevorrichtung sich in einem ausgeschalteten beziehungsweise einem stromsparenden Betriebszustand befindet. Die Anzeigevorrichtung kann dann nämlich ausgeschaltet beziehungsweise stromsparend bleiben und der Eingang einer Nachricht ist dem Benutzer trotzdem mitteilbar. Dadurch ist der Energiebedarf des erfindungsgemäßen Funkgeräts reduzierbar, so dass sich eine längere Batterie- beziehungsweise Akkustandzeit ergibt. Darüberhinaus ist erfindungsgemäß dem Benutzer der Eingang der Nachricht instantan optisch signalisierbar. Er muß daher nicht eine Handlung ausführen, beispielsweise ein Bedienelement des Funkgeräts betätigen, um über den Eingangsstatus - d.h. ob eine Nachricht für ihn vorliegt und, wenn ja, wieviele Nachrichten vorliegen - der an ihn gesendeten Nachrichten informiert zu sein.

Weiterhin ist von Vorteil, dass der Nachricht wenigstens ein Nachrichtenparameter zugeordnet ist, dass das Funkgerät Mittel zur Auswertung des Nachrichtenparameters aufweist, wobei die Signalisierung in Abhängigkeit der Auswertung des Nachrichtenparameters vorgesehen ist. Dadurch ist es möglich, dem Benutzer des Funkgerätes durch Variation der Signalisierung, insbesondere durch die zeitliche Änderung der Signalintensität des Ausgabesignals, Informationen über den Nachrichtenparameter zukommen zu lassen.

Weiterhin ist von Vorteil, dass als Nachrichtenparameter die Anzahl der wenigstens einen eingegangenen Nachricht und/oder der Typ der wenigstens einen eingegangenen Nachricht und/oder der Absender der wenigstens einen eingegangenen Nachricht vorgesehen ist. Dadurch ist es möglich, dass der Benutzer des Funkgerätes, je nach Definition der Signalisierung in Abhängigkeit des beziehungsweise der Nachrichtenparameter, eine Information über die Anzahl, den Typ und/oder den Absender der wenigstens einen eingegangenen Nachricht erhält.

Weiterhin ist von Vorteil, dass der Nachrichtenindikator ein Ausgabesignal vorsieht und dass die Signalisierung durch wenigstens eine vorgegebene Intensität oder Intensitätsänderung des Ausgabesignals vorgesehen ist. Dadurch wird die durch die Signalisierung zu übertragende Information über den Nachrichtenparameter auf einfache Weise an den Benutzer übermittelt.

Weiterhin ist von Vorteil, dass die Anzahl der wenigstens einen Intensitätsänderung einem Vielfachen der Anzahl der wenigstens einen eingegangenen Nachricht entspricht. Dadurch ist es mit einfachen Mitteln möglich, dem Benutzer die Information zu übermitteln, wie viele Nachrichten eingegangen sind beziehungsweise vorliegen.

Weiterhin ist von Vorteil, dass das Ausgabesignal ein optisches Signal ist und dass die Signalisierung durch eine vorgegebene Farbe oder Farbänderung des Ausgabesignals vorgesehen ist. Dadurch ist es möglich, mehr Informationen über die Nachrichtenparameter beziehungsweise denselben Informationsgehalt sicherer, d.h. leichter erkennbar und unterscheidbar, an den Benutzer zu übermitteln.

Weiterhin ist von Vorteil, dass der Nachrichtenindikator eine Leuchtdiode ist. Dadurch ist die erfindungsgemäße Informationsübertragung mittels des Nachrichtenindikators an den Benutzer mit einfachen Mitteln, d.h. mit geringen Kosten und geringem Herstellungsaufwand möglich.

Weiterhin ist von Vorteil, dass eine Betriebsinformation durch den Nachrichtenindikator (15) mittels einer weiteren Signalisierung signalisierbar ist. Dadurch kann der Nachrichtenindikator zumindest zeitlich nacheinander sowohl - mittels der Signalisierung - zum Signalisieren des Eingangs der Nachricht als auch - mittels der weiteren Signalisierung - zum Signalisieren der Betriebsinformation des Funkgerätes Verwendung finden. Hierdurch ist es nicht erforderlich, sowohl für die eine Funktion als auch für die andere Funktion jeweils einen Indikator am erfindungsgemäßen Funkgerät vorzusehen.

Weiterhin ist von Vorteil, dass eine Betriebsinformation durch einen weiteren Nachrichtenindikator mittels einer weiteren Signalisierung signalisierbar ist. Dadurch ist eine leichte Trennung zwischen den Betriebsinformationen und den Informationen, die den Nachrichtenstatus wiedergeben, möglich.

### Zeichnung

Ein Ausführungsbeispiel der Erfindung ist in der Zeichnung dargestellt und in der nachfolgenden Beschreibung näher erläutert. Es zeigen
Figur 1 ein erfindungsgemäßes Funkgerät,
Figur 2 das mit einem Mobilfunknetz verbundene erfindungsgemäße Funkgerät,
Figur 3 ein Ablaufdiagramm zur Auswertung eines Nachrichtenparameters einer eingegangenen Nachricht und
Figur 4 ein Beispiel für eine Signalisierung eines Nachrichtenparameters.

### Beschreibung des Ausführungsbeispiels

Kurznachrichtendienste, wie beispielsweise der SMS-Service im GSM-Mobilfunknetz (groupe spéciale mobile) erfahren immer größere Verbreitung beziehungsweise Akzeptanz trotz ihrer Beschränkung auf simple Textnachrichten und maximale Textlängen von 160 Zeichen. Sollen größere Textnachrichten versandt werden, bietet beispielsweie SMS die Möglichkeit der Nachrichtenverkettung, d.h. der gesamte zu versendende Textumfang wird auf mehrere Kurznachrichten verteilt. Ein entsprechend spezifizierter Mechanismus sorgt für das richtige Zusammenfügen am Empfänger.

Ein weiterer Zusatzdienst, der SMS zur Benachrichtigung nutzt, ist das sogenannte Unified Messaging, eine Plattform, die Fax, E-Mail, Voice Mailbox, usw. zusammenfasst und einen einheitlichen Zugriff (meist über das Internet) auf die Daten dieser zunächst unterschiedlichen Dienste bereitstellt. Auch hier bilden die SMS-Nachrichten als Benachrichtigung über neu eingegangene Daten einen wichtigen Bestandteil. Daher wird die Erfindung im folgenden anhand des SMS beziehungsweise anhand von SMS-Nachrichten beispielhaft beschrieben; sie beschränkt sich jedoch nicht auf die Verwendung lediglich mit Nachrichten gemäß des SMS-Standards.

Der Vorteil des Short Message Service besteht darin, dass eine Nachricht den Empfänger unmittelbar erreicht oder, sofern das mobile Endgerät nicht erreichbar ist, zwischengespeichert und automatisch übermittelt wird, wenn das mobile Endgerät wieder erreichbar ist. Aus diesem Grunde wird dieser Dienst neben der Übermittlung von normalen Textnachrichten auch zur Benachrichtigung als Bestandteil anderer Dienste genutzt. Ein solcher Zusatzdienst, der SMS zur Benachrichtigung nutzt, ein wesentlicher Bestandteil heutiger Mobilfunksysteme ist und auch in zukünftigen Mobilfunknetzen sein wird, ist die Voice Mailbox, d.h. die Möglichkeit, eine gesprochene Nachricht für einen nicht erreichbaren Adressaten in einem Speicher abzulegen, so dass beispielsweise die Funktion eines Anrufbeantworters erfüllt wird. Die Voice Mailbox ist eine, in der Regel zentrale, Instanz im Mobilfunknetz eines Netzbetreibers, welche - ähnlich wie lokale Anrufbeantworter am Telefonanschluß eines Benutzers im Festnetz - die Möglichkeit bietet, Sprachnachrichten für einen Benutzer des Mobilfunknetzes zu speichern. Dies kann dann der Fall sein, wenn der Angerufene zur Zeit des Anrufs nicht erreichbar ist; beispielsweise aufgrund eines Empfangslochs im Versorgungsgebiet des Mobilfunknetzes oder weil der Angerufene sein Mobilfunktelefon nicht eingeschaltet hat. Hat ein Anrufer nun eine Nachricht auf einer Voice Mailbox hinterlassen, so wird der Angerufene in der Regel mittels einer SMS-Textnachricht über den Eingang und die Anzahl dieser neuen Sprach-Nachrichten unterrichtet. Wie mit jeder anderen SMS auch, geschieht dies, sobald das Mobilfunktelefon des Angerufenen wieder für das Mobilfunknetz erreichbar ist. In den obengenannten beiden Fällen wäre dies somit für den ersten Fall dann gegeben, wenn der Angerufene wieder in einen Bereich mit ausreichender Netzabdeckung durch seinen Mobilfunknetzbetreiber kommt oder im zweiten Fall, wenn der Angerufene sein Mobilfunktelefon erneut einschaltet und dieses sich im Mobilfunknetz einbucht.

Bei manchen Mobilfunktelefonen wird der Eingang einer SMS-Nachricht durch eine entsprechende Anzeige in einer Anzeigevorrichtung beziehungsweise einem Display des Telefons dem Angerufenen mitgeteilt. Dagegen bieten viele Mobilfunktelefone die Möglichkeit, die Anzeigevorrichtung nach einer gewissen Zeit der Nichtbenutzung durch den Benutzer automatisch auszuschalten beziehungsweise in einen stromsparenden Modus zu schalten, um den Energieverbrauch des Funktelefons zur Erhöhung der Batterielaufzeit zu reduzieren. Je eher das Display erlischt, umso weniger Batterieleistung wird verbraucht, d.h. umso länger kann das Mobilfunktelefon betrieben werden, ohne den Akku neu laden zu müssen. Reaktiviert wird das Display beispielsweise durch einen Druck auf die Tastatur des Mobilfunktelefons. Dies bedeutet, dass die Anzeigevorrichtung die meiste Zeit ausgeschaltet ist, weil ein Benutzer in der Regel nicht andauernd das Mobilfunktelefon aktiv benutzt.

Wenn das Display also erloschen ist, muß ein Benutzer zur Überprüfung, ob Nachrichten, insbesondere Kurznachrichten, vorliegen, das Display zunächst aktivieren. Hierzu muß in der Regel explizit eine Taste beziehungsweise ein anderes Bedienelement am Mobilfunktelefon gedrückt beziehungsweise betätigt werden. Das Erkennen des Eingangs einer Nachricht durch den Benutzer anhand eines akustischen Signals ist oftmals nicht oder schlecht möglich, da beispielsweise das akustische Signalisieren vom Benutzer wegen der Anwesenheit anderer Personen oder aus anderen Gründen, ausgeschaltet ist oder aber weil sich der Benutzer aus Distanzgründen oder aus Lärmgründen außerhalb des Hörbereichs des Funktelefons befindet.

Erfindungsgemäß ist es vorgesehen, neu eingetroffene Nachrichten an einem Funkgerät, insbesondere an einem Mobilfunktelefon, auch unabhängig von der Anzeigevorrichtung anzuzeigen. Dieses erlaubt das unmittelbare Erkennen neu eingegangener Nachrichten auch wenn ein etwaiges akustisches Signal nicht wahrgenommen werden konnte.

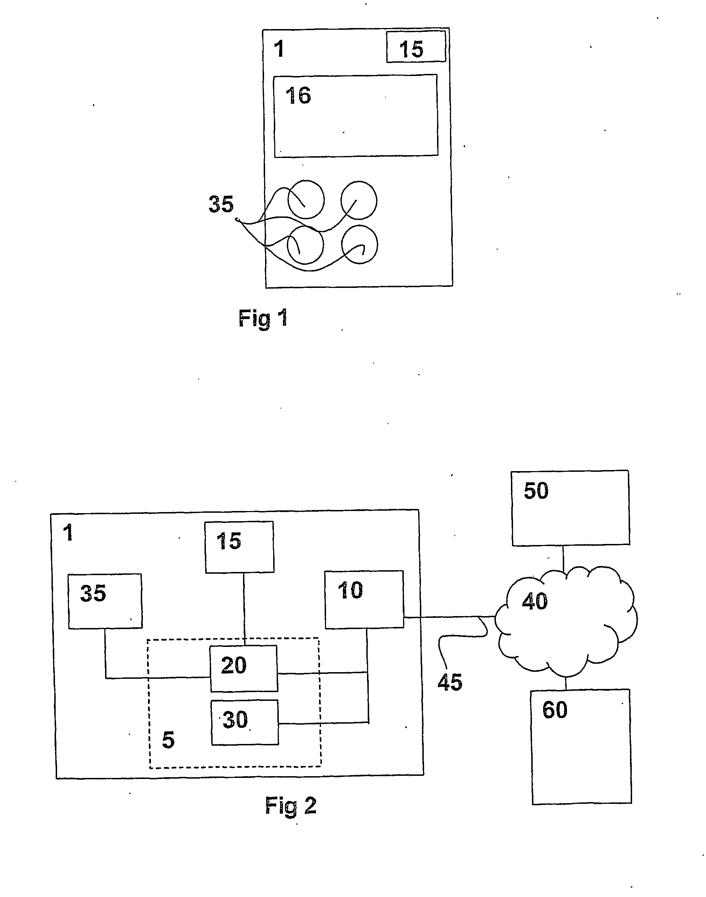

In Figur 1 ist ein erfindungsgemäßes Funkgerät 1 schematisch dargestellt. Das Funkgerät 1 ist dabei als Mobilfunktelefon, Handy usw. vorgesehen und funktioniert erfindungsgemäß insbesondere gemäß eines Standards zur drahtlosen Kommunikation, wie beispielsweise GSM, UMTS o.ä. Das Funkgerät 1 umfasst erfindungsgemäß die Anzeigevorrichtung 16, die auch als Display 16 bezeichnet wird. Weiterhin umfaßt das Funkgerät 1 einen Nachrichtenindikator 15 und Bedienelemente 35, wie beispielsweise Tasten oder dergleichen. Der Nachrichtenindikator 15 ist insbesondere als LED (light emitting diode) vorgesehen und wird im folgenden daher auch als LED 15 bezeichnet. Die LED 15 ist erfindungsgemäß insbesondere als mehrfarbige LED 15 ausgeführt, d.h. der Nachrichtenindikator 15 kann mehrere Farben darstellen. Dies erweitert potentiell den durch den Nachrichtenindikator 15 dem Benutzer übertragbaren Informationsgehalt einer Signalisierung. In einem Ausführungsbeispiel ist die LED 15 beispielsweise als zweifarbige LED 15 vorgesehen.

Die Bedienelemente 35 werden im folgenden auch als Eingabevorrichtung 35 bezeichnet. Die Anzeigevorrichtung 16 kann erfindungsgemäß verschiedene Betriebszustände einnehmen, zumindest einen eingeschalteten beziehungsweise aktivierten Betriebszustand und einen ausgeschalteten Betriebszustand beziehungsweise einen solchen mit verminderter Aktivierung (z.B. Sparmodus).

In Figur 2 ist das mit einem Mobilfunknetz 40 verbundene Funkgerät 1 dargestellt. Das Funkgerät 1 ist über eine Luftschnittstelle 45 an das Mobilfunknetz 40 angebunden. An das Mobilfunknetz 40 sind weiterhin eine Einrichtung 50 drahtlos oder drahtgebunden angebunden, wobei die Einrichtung 50, Zusatzdienste, wie beispielsweise eine Voice Mailbox, im Mobilfunknetz 40 zur Verfügung stellt. An das Mobilfunknetz 40 ist weiterhin ein Kommunikationsendgerät 60, in der Regel über eine nicht näher bezeichnete drahtlose Schnittstelle, angebunden. Das Mobilfunknetz 40 funktioniert erfindungsgemäß insbesondere gemäß eines Standards zur drahtlosen Kommunikation, beispielsweise GSM, UMTS o.ä. Das Funkgerät 1 umfasst erfindungsgemäß als Mittel zur Auswertung von Nachrichtenparametern eine Auswertevorrichtung 20, mit der die Eingabevorrichtung 35, eine Sende/Empfangsvorrichtung 10 und die Anzeigevorrichtung 16 verbunden sind. Weiterhin umfasst das Funkgerät 1 einen Speicher 30 zum Abspeichern von Informationen, beispielsweise von Kurznachrichten, der mit der Sende/Empfangsvorrichtung 10 verbunden ist.

Bei einem GSM-kompatiblen Funkgerät 1 befindet sich der Speicher 30 in der Regel auf einem Identifikationsmodul, wie beispielsweise das SIM-Modul (Subscriber Identification Module). Unter Einbeziehung des SAT-Standards (Sim Application Toolkit), besteht die Möglichkeit, den Speicher 30 und die Auswertevorrichtung 20 auf einem SIM-Modul 5 zusammenzufassen. Diese Möglichkeit ist in Figur 2 dadurch gekennzeichnet, dass das SIM-Modul 5 mit unterbrochener Linie (gestrichelt) die Auswertevorrichtung 20 und den Speicher 30 umfasst.

Die Sende/Empfangsvorrichtung 10 empfängt über die Luftschnittstelle 45 eine Kurznachricht aus einem Mobilfunknetz 40, z.B. von dem Telekommunikationsendgerät 60 oder von einem im Mobilfunknetz 40 betriebenen Zusatzdienst beziehungsweise einer für diesen Zusatzdienst notwendigen Einrichtung 50. Die Kurznachricht wird im Funkgerät 1 verarbeitet, d.h. auf der Anzeigevorrichtung 16 - falls diese sich in einem eingeschalteten Betriebszustand befindet - angezeigt und im Speicher 30 abgelegt. Zusätzlich wird die Nachricht an die Auswertevorrichtung 20 geleitet, die im einfachsten Fall den Eingang der Nachricht registriert und über den Nachrichtenindikator 15 anzeigt beziehungsweise signalisiert.

Über die Eingabevorrichtung 35 ist es möglich, Informationen zur Steuerung der Auswertevorrichtung 20 einzugeben und diese so zu konfigurieren, dass auf der Anzeigevorrichtung 16 und/oder durch den Nachrichtenindikator 15 beispielsweise nur ausgewählte Kurznachrichten angezeigt werden, beziehungsweise unterschiedliche Nachrichten unterschiedlich zur Anzeige kommen. Auswahlkriterium ist beispielsweise die Rufnummer des Absenders, der Typ der Nachricht, die Anzahl der eingegangenen Nachrichten und/oder die Tatsache, ob die Nachricht dem Benutzer bereits zugänglich gemacht wurde, d.h. beispielsweise, ob die Nachricht bereits vom Benutzer abgehört wurde.

Es sei im folgenden Ausführungsbeispiel beispielhaft angenommen, dass die Auswertevorrichtung 20 auf der Basis der Absender-Rufnummer als Auswahlkriterium arbeitet. Der Benutzer kann die Auswertevorrichtung 20 über die Eingabevorrichtung 35 derart konfigurieren, dass zum einen beim Empfang einer Kurznachricht, die vom Telekommunikationsendgerät 60, dem eine bestimmte Rufnummer, beispielsweise die Nummer "0172/4999008", zugeordnet ist, gesendet wurde, der Nachrichtenindikator 15 mit einer ersten Farbe und dass zum anderen beim Empfang einer Kurznachricht als Benachrichtigung über den Eingang einer Sprachnachricht in einer Voice Mailbox der Nachrichtenindikator 15 mit einer zweiten Farbe eine Signalisierung abgibt, also z.B. blinkt.

Die beispielsweise als Blinksequenz ausgebildete Signalisierung trägt z.B. eine Information über die Anzahl der vorhandenen Nachrichten oder über andere Nachrichtenparameter. Dies ist dadurch möglich, dass es dem Empfang beziehungsweise dem Vorhandensein beispielsweise dreier (z.B. unabgehörter) Nachrichten in der beispielsweise als Voice Mailbox ausgebildeten Einrichtung 50 entspricht, wenn der Nachrichtenindikator 15 dreimal kurz hintereinander in einer seiner möglichen Farben blinkt.

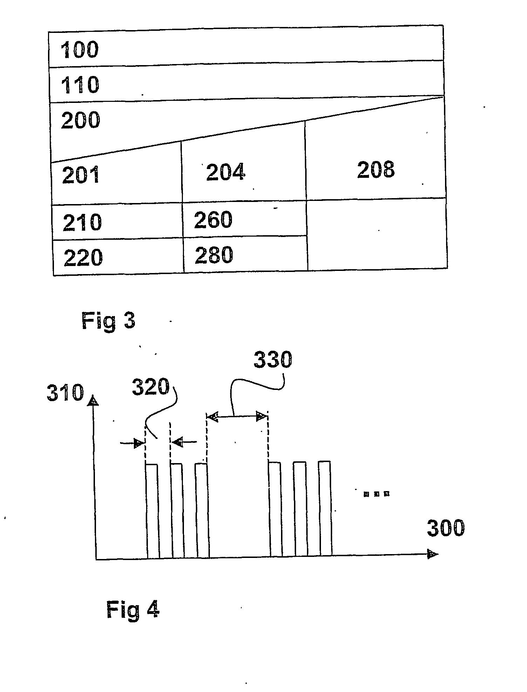

Zur Illustrierung des Ausführungsbeispiels zeigt Figur 3 ein Ablaufdiagramm. Bei einem ersten Programmpunkt 100 wird eine Kurznachricht empfangen und bei einem zweiten Programmpunkt 110, insbesondere im Speicher 30, abgespeichert. Bei einem dritten Programmpunkt 200 findet die Auswertung der eingegangenen Kurznachricht anhand eines oder mehrerer Nachrichtenparameter statt, wobei im Ausführungsbeispiel als Nachrichtenparameter die Rufnummer des Absenders der Nachricht gewählt ist. Im betrachteten Beispiel stehen dann beispielsweise folgende Fälle zur Verfügung: ein mit dem Bezugszeichen 201 versehener erster Fall, der vorliegt, wenn eine Nachricht vom Telekommunikationsendgerät 60, dem beispielsweise die Rufnummer "0172/4999008" zugeordnet ist, empfangen wird; ein mit dem Bezugszeichen 204 versehener zweiter Fall, der dem Eingang einer Nachricht von der Einrichtung 50, d.h. beispielsweise einer Voice Mailbox, entspricht; ein mit dem Bezugszeichen 208 versehener dritter Fall, der alle anderen Situationen umfasst. Falls beim dritten Programmpunkt 200 ermittelt wird, dass der erste Fall 201 zutrifft, wird in einem vierten Programmpunkt 210 ein nicht dargestellter erster Zähler inkrementiert und der neue Zustand in einem fünften Programmpunkt 220 durch Blinken der LED 15 in der ersten Farbe angezeigt. Für den Fall, dass beim dritten Programmpunkt 200 erkannt wird, dass der zweite Fall 204 zutrifft, wird bei einem sechsten Programmpunkt 260 ein zweiter, ebenfalls nicht dargestellter Zähler inkrementiert und es wird in einem siebten Programmpunkt 280 der neue Zustand durch Blinken der LED 15 in der zweiten, beispielsweise anderen, Farbe angezeigt. Für den Fall, dass im dritten Programmschritt 200 erkannt wird, dass der dritte Fall 208 zutrifft, so findet keine weitere Aktion statt.

Die Auswertung in der Auswerteeinheit 20 ist nicht auf die Rufnummer des Absenders beschränkt. Sie kann sich ebenso auf den Text der Nachricht beziehungsweise der Kurznachricht, die Art Nachricht, die Anzahl der vorhandenen Nachrichten oder dergleichen, beziehen. Beispielsweise werden als Auswahlkriterien das Vorhandensein oder Nichtvorhandensein der Wörter "Mailbox" oder "E-Mail" verwendet, um den Typ der Nachricht festzustellen. Ebenso können Elemente des SMS-Headers, d.h. des Kopfteils einer SMS-Nachricht, oder des SMS-User-Data-Headers zur Auswahl herangezogen werden. Zusätzlich ist es hier sinnvoll, spezielle benutzerdefinierte Auswahlkriterien zu bestimmen, die es erlauben, bestimmte Benachrichtigungen, d.h. bestimmte Nachrichten, zu erkennen und damit auf eine besondere Art zu behandeln, beispielsweise dadurch, daß eine spezielle Signalisierung vom Nachrichtenindikator 15 abgegeben wird oder dadurch, dass bestimmte Nachrichten anders, insbesondere im Speicher 30, abgespeichert werden als andere Nachrichten. So wird z.B. der Empfang von E-Mails via SMS durch die Erkennung bestimmter Headerelemente erkannt, die ebenfalls als Auswahlkriterien verwendet werden können. Weiterhin können die empfangenen Nachrichten so beispielsweise sortiert abgespeichert werden.

In Figur 4 ist ein Beispiel für eine Signalisierung des Nachrichtenindikators 15 angegeben. In einer Auftragung der Intensität 310 des Ausgabesignals des Nachrichtenindikators 15 über dem zeitlichen Verlauf 300 derselben ist eine Blinksequenz dargestellt, die dadurch gekennzeichnet ist, dass dreimal in einem ersten zeitlichen Abstand 320 geblinkt wird. Ein einmaliges Blinken ist dadurch gegeben, dass die Intensität 310 des Ausgabesignals des Nachrichtenindikators 15 sich beispielsweise zweimal ändert, also dass die Intensität 310 zum Beispiel von einem ersten Wert auf einen zweiten Wert eingestellt wird und - nach einer gewissen Wartezeit - anschließend wieder auf den ersten Wert eingestellt wird, um dort ebenfalls eine gewisse weitere Wartezeit zu verharren. Der erste zeitliche Abstand 320 entspricht dabei dem Zeitintervall beginnend von der Intensitätsänderung vom ersten Wert der Intensität 310 auf den zweiten Wert der Intensität 310 bis zum Ende der weiteren Wartezeit nach der erneuten Einstellung der Intensität 310 des Ausgabesignals auf den ersten Wert. Durch die beschriebene Abfolge eines dreimaligen Blinkens - d.h. durch eine insgesamt sechsmalige Intensitätsänderung des Ausgabesignals; die Anzahl der Intensitätsänderungen entspricht dem Zweifachen der Anzahl der eingegangenen Nachrichten - wird ein Beispiel angegeben, wie es erfindungsgemäß möglich ist, den Eingang von drei neuen Nachrichten zu signalisieren. In Abbildung 4 sind zwei solcher Blinksequenzen dargestellt, wobei ein zweiter zeitlicher Abstand 330 zwischen den Blinksequenzen vorgesehen ist. Der zweite zeitliche Abstand 330 ist so vorgesehen, dass die Blinksequenzen für den Benutzer unterscheidbar beziehungsweise trennbar sind, beispielsweise dadurch, dass der zweite zeitliche Abstand 330 größer vorgesehen als der erste zeitliche Abstand. Weitere Möglichkeiten, die Signalisierung durch den Nachrichtenindikator 15 zu gestalten, ergeben sich dadurch, dass sich die Intensität des Ausgabesignals des Nachrichtenindikators 15 nicht wie in Figur 4 dargestellt, binär ändert - d.h. es gibt lediglich zwei Zustände -, sondern die Signalisierung kann auch so vorgesehen sein, dass mehr als zwei diskrete Werte für die Intensität 310 vorgesehen sind und dass die Intensitätsänderung des Ausgabesignals von einem dieser diskreten Werte auf einen anderen dieser diskreten Werte dem Benutzer eine Information über eine eingegangene Nachricht übermittelt.

Erfindungsgemäß ist es in einer weiteren Ausführungsform vorgesehen, durch den Nachrichtenindikator 15, zusätzlich zu den Informationen über den Status des Nachrichteneingangs beziehungsweise über den Eingang einer Nachricht, dem Benutzer andere Informationen, insbesondere Betriebsinformationen, zu übertragen. Unter Betriebsinformationen werden hierbei insbesondere Informationen zum Ladezustand der nicht dargestellten Batterie beziehungsweise des nicht dargestellten Akkus (Batteriestatus) , Informationen über die Verfügbarkeit des Mobilfunknetzes 40 oder auch Informationen darüber, ob das Funkgerät 1 gerade im Mobilfunknetz 40 eingebucht ist oder nicht, verstanden. Solche Betriebsinformationen werden bereits bisher insbesondere über Leuchtdioden dem Benutzer mittels einer weiteren Signalisierung mitgeteilt. Für Informationen inhaltlicher Natur von Nachrichten, wie solche betreffend die Anzahl, den Typ oder auch den Absender von Nachrichten o.ä, wird bei Funkgeräten bisher immer die Anzeigevorrichtung verwendet, was zu den geschilderten Nachteilen, insbesondere des höheren Stromverbrauchs und der komplizierteren Bedienung solcher Funkgeräte führt.

Erfindungsgemäß ist es, die weitere Signalisierung von Betriebsinformationen an den Benutzer und die Signalisierung von Informationen inhaltlicher Natur, d.h. also beispielsweie betreffend den Eingang von Nachrichten, an den Benutzer, sowohl getrennt, d.h. mit dem Nachrichtenindikator 15 und einem weiteren, nicht dargestellten Nachrichtenindikator - beispielsweise mit zwei unterschiedlichen Leuchtdioden -, durchzuführen als auch gemeinsam, d.h. mit dem Nachrichtenindikator 15 zum Signalisieren sowohl der Betriebsinformationen als auch zum Signalisieren des Status des Nachrichteneingangs, durchzuführen. Im zweiten Fall werden beispielsweise die Betriebsinformationen ausschließlich mittels einer dritten Farbe signalisiert, währenddem die Informationen inhaltlicher Natur nur mittels der ersten und zweiten Farbe signalisiert werden.

Als Ausführungsbeispiel sei hier lediglich angegeben, dass sich ein erfindungsgemäßes Funkgerät 1 beispielsweise derart vorgesehen ist, dass die LED 15 in roter Farbe relativ niederfrequent blinkt, wenn das Funkgerät 1 die regelmäßigen Signale des Mobilfunknetzes 40 nicht mehr oder nur noch sehr schlecht empfängt, d.h. z.B. im Fall einer Versorgungslücke des Mobilfunknetzes 40. Falls in diesem Ausführungsbeispiel der Akku fast leer ist, so blinkt die LED 15 hochfrequent und ebenfalls in roter Farbe, und zwar unabhängig davon, ob das Funkgerät 1 Empfang hat oder nicht. Falls das Funkgerät 1 sowohl im Netz eingebucht ist und darüberhinaus noch die regelmäßigen Signale des Mobilfunknetzes empfängt, so blinkt die LED 15 in grüner Farbe relativ niederfrequent. Der Benutzer hat somit in diesem Ausführungsbeispiel stets Gelegenheit zu erkennen, ob das Funkgerät 1 Empfang hat und ob der Akku dringend geladen werden muß - und dies unabhängig davon, ob die Anzeigevorrichtung eingeschaltet oder ausgeschaltet beziehungsweise in einen stromsparenden Modus geschaltet ist. Zur Signalisierung des Eingangs einer Nachricht ist erfindungsgemäß in diesem Fall vorgesehen, dass die Leuchtdiode beispielsweise in blauer Farbe blinkt.

Dagegen ist es jedoch auch erfindungsgemäß, für die Signalisierung des Eingangs einer Nachricht keine weitere Farbe der LED 15 vorzusehen, sondern lediglich ein anderes Blinkmuster vorzusehen als das niederfrequente Blinken in grüner Farbe, das sich im betrachteten Ausführungsbeispiel einstellt, wenn das Funkgerät 1 sowohl Kontakt zum Mobilfunknetz hat als auch über eine genügende Energiereserver verfügt. Damit ist sichergestellt, dass der Benutzer stets erkennt, ob das Funkgerät 1 im Mobilfunknetz 40 eingebucht ist oder nicht. Liegen nun z.B. drei neue Nachrichten vor, so blinkt die LED 15 dreimal mit einem zeitlichen Abstand der Blinkzeichen, der dem ersten Abstand 320 entspricht. Dieser ist beispielsweise so gewählt, dass sich eine mittlere Blinkfrequenz zwischen derjenigen des niederfrequenten Blinkens zum Signalisieren einer korrekten Netzverbindung einerseits und derjenigen des höherfrequenten Blinkens zum Signalisieren des mangelhaften Ladezustands des Akkus andererseits einstellt. Anschließend macht die LED 15 eine lange Pause, bevor sie erneut dreimal in der mittleren Blinkfrequenz blinkt. Die Dauer der langen Pause sollte hierbei mindestens solange wie die zeitlichen Abstände der Blinkzeichen des niederfrequenten Blinkens sein.

## Patentansprüche

1. Funkgerät (1) mit einer Schnittstelle zum Empfang wenigstens einer Nachricht und mit einer Anzeigevorrichtung (16), wobei die Anzeigevorrichtung vorgesehen ist, wenigstens einen eingeschalteten und wenigstens einen ausgeschalteten Betriebszustand einzunehmen, **gekennzeichnet durch** folgende Merkmale:
- das Funkgerät (1) umfasst einen Nachrichtenindikator (15), wobei der Eingang der Nachricht **durch** den Nachrichtenindikator (15) mittels einer Signalisierung unabhängig vom Betriebszustand der Anzeigevorrichtung (16) signalisierbar ist,
- der Nachricht ist wenigstens ein Nachrichtenparameter zugeordnet,
- das Funkgerät (1) weist Mittel zur Auswertung des Nachrichtenparameters auf, wobei die Signalisierung in Abhängigkeit der Auswertung des Nachrichtenparameters vorgesehen ist.

2. Funkgerät (1) nach Anspruch 1, **dadurch gekennzeichnet, dass** als Nachrichtenparameter die Anzahl der wenigstens einen eingegangenen Nachricht und/oder der Typ der wenigstens einen eingegangenen Nachricht und/oder der Absender der wenigstens einen eingegangenen Nachricht vorgesehen ist.

3. Funkgerät (1) nach einem der vorhergehenden Ansprüche, **dadurch gekennzeichnet, dass** der Nachrichtenindikator (15) ein Ausgabesignal vorsieht und dass die Signalisierung durch wenigstens eine vorgegebene Intensität und/oder Intensitätsänderung des Ausgabesignals vorgesehen ist.

4. Funkgerät (1) nach Anspruch 3, **dadurch gekennzeichnet, dass** die Anzahl der wenigstens einen Intensitätsänderung einem Vielfachen der Anzahl der wenigstens einen eingegangenen Nachricht entspricht.

5. Funkgerät (1) nach Anspruch 3 oder 4, **dadurch gekennzeichnet, dass** das Ausgabesignal ein optisches Signal ist und dass die Signalisierung durch eine vorgegebene Farbe und/oder Farbänderung des Ausgabesignals vorgesehen ist.

6. Funkgerät (1) nach Anspruch 3 bis 5, **dadurch gekennzeichnet, dass** der Nachrichtenindikator (15) eine Leuchtdiode ist.

7. Funkgerät (1) nach Anspruch 1, **dadurch gekennzeichnet, dass** eine Betriebsinformation durch den Nachrichtenindikator (15) mittels einer weiteren Signalisierung signalisierbar ist.

8. Funkgerät (1) nach Anspruch 1, **dadurch gekennzeichnet, dass** eine Betriebsinformation durch einen weiteren Nachrichtenindikator mittels einer weiteren Signalisierung signalisierbar ist.

## Claims

1. Radio (1) having an interface for reception of at least one message, and having a display apparatus (16), with the display apparatus being provided to assume at least one switched-on and at least one switched-off operating state, **characterized by** the following features:
- the radio (1) has a message indicator (15), in which case the receipt of the message can be signalled by the message indicator (15) by means of signalling independently of the operating state of the display apparatus (16),
- the message is associated with at least one message parameter, and
- the radio (1) has means for evaluation of the message parameter, with the signalling being provided as a function of the evaluation of the message parameter.

2. Radio (1) according to Claim 1, **characterized in that** the number of the at least one received message or messages and/or the type of the at least one received message or messages and/or the sender of the at least one received message or messages are/is provided as a message parameter.

3. Radio (1) according to one of the preceding claims, **characterized in that** the message indicator (15) provides an output signal, and **in that** the signalling is provided by at least one predetermined intensity and/or intensity change of the output signal.

4. Radio (1) according to Claim 3, **characterized in that** the number of the at least one intensity change or changes corresponds to a multiple of the number of the at least one received message or messages.

5. Radio (1) according to Claim 3 or 4, **characterized in that** the output signal is an optical signal, and **in that** the signalling is provided by a predetermined colour and/or colour change of the output signal.

6. Radio (1) according to Claims 3 to 5, **characterized in that** the message indicator (15) is a light-emitting diode.

7. Radio (1) according to Claim 1, **characterized in that** operating information can be signalled by the message indicator (15) by means of further signalling.

8. Radio (1) according to Claim 1, **characterized in that** operating information can be signalled by a further message indicator by means of further signalling.

## Revendications

1. Appareil radio (1) comportant une interface pour recevoir au moins une information ainsi qu'un dispositif d'affichage (16), le dispositif d'affichage étant prévu pour prendre au moins un état de fonctionnement branché et au moins un état de fonctionnement coupé,
**caractérisé en ce que**
- l'appareil radio (1) comprend un indicateur d'informations (15), l'arrivée de l'information étant signalée par l'indicateur d'informations (15) à l'aide d'une signalisation indépendante de l'état de fonctionnement du dispositif d'affichage (16),
- l'information comportant au moins un paramètre d'informations,
- l'appareil radio (1) comporte des moyens pour exploiter le paramètre d'informations et la signalisation est prévue en fonction de l'exploitation du paramètre d'informations.

2. Appareil radio (1) selon la revendication 1,
**caractérisé en ce que**
le paramètre d'informations est le nombre d'au moins une information d'entrée et/ou du type d'au moins une information d'entrée et/ou de l'émetteur d'au moins une information d'entrée.

3. Appareil radio (1) selon l'une des revendications précédentes,
**caractérisé en ce que**
l'indicateur d'informations (15) prévoit un signal d'émission et la signalisation est prévue par au moins une intensité prédéfinie et/ ou variation d'intensité du signal d'émission.

4. Appareil radio (1) selon la revendication 3,
**caractérisé en ce que**
le nombre d'au moins une variation d'intensité représente un multiple du nombre d'au moins une information d'entrée.

5. Appareil radio (1) selon la revendication 3 ou 4,
**caractérisé en ce que**
le signal d'émission est un signal optique et la signalisation se fait par une couleur prédéfinie et/ou une variation de couleur du signal d'émission.

6. Appareil radio (1) selon les revendications 3 à 5,
**caractérisé en ce que**
l'indicateur d'informations (15) est une diode électroluminescente.

7. Appareil radio (1) selon la revendication 1,
**caractérisé en ce qu'**
une information de fonctionnement est signalée par l'indicateur d'informations (15) à l'aide d'une autre signalisation.

8. Appareil radio (1) selon la revendication 1,
**caractérisé en ce qu'**
une information de fonctionnement est signalée par au moins un autre indicateur d'informations, notamment à l'aide d'une autre signalisation.
